# EUROPEAN PATENT SPECIFICATION

(11) **EP 1 400 175 B1**
(45) Date of publication and mention of the grant of the patent: **27.08.2008**
(21) Application number: 02733256.8
(22) Date of filing: 30.05.2002
(51) Int. Cl.: A23G 3/54, A23G 1/54, A21D 13/08, A21D 15/08, A23G 3/20

(54) **IMPREGNATED AND LAMINATED OILY CAKE AND PROCESS FOR PRODUCING THE SAME**
GETRÄNKTER, SCHICHTARTIG AUFGEBAUTER ÖLHALTIGER KUCHEN UND SEINE HERSTELLUNG
GATEAU A BASE DE MATIERE GRASSE EN COUCHES DANS LEQUEL UN INGREDIENT EST INCORPORE ET PROCEDE DE PRODUCTION ASSOCIE

(30) Priority: 30.05.2001 JP 2001161534
(43) Date of publication of application: 24.03.2004
(73) Proprietor: Meiji Seika Kaisha, Ltd., Tokyo 104-8002 (JP)
(72) Inventor: TAKEUCHI,S. c/o Food Research and Developments Lab, Sakado-shi, Saitama 350-0289 (JP); OKAYA, Eiji c/o Food Research and Development Labs, Sakado-shi, Saitama 350-0289 (JP)
(74) Representative: Kyle, Diana
(86) International application number: PCT/JP2002/005303
(87) International publication number: WO 2002/096212

(56) References cited:
- EP-A- 0 427 309
- EP-A- 0 614 614
- EP-A- 0 674 837
- EP-A- 0 941 665
- EP-A1- 0 941 665
- WO-A-85/04075
- GB-A- 2 077 566
- JP-A- 8 089 173
- JP-A- 10 150 917
- JP-A- 52 018 864
- US-A- 4 159 348
- US-A- 4 545 997
- US-A- 4 587 128
- US-A- 4 889 738
- DATABASE WPI Section Ch, Week 200219 Derwent Publications Ltd., London, GB; Class D13, AN 2002-147823 XP002278749 & WO 02/00032 A (MEIJI SEIKA KAISHA LTD) 3 January 2002 (2002-01-03) & EP 1 297 750 A 2 April 2003 (2003-04-02)
- PATENT ABSTRACTS OF JAPAN vol. 2002, no. 02, 2 April 2002 (2002-04-02) & JP 2001 269121 A (MORINAGA & CO LTD), 2 October 2001 (2001-10-02)

## Description

### BACKGROUND OF THE INVENTION

### Field of the Invention

The present invention relates to an impregnated, layered, fat-based confectionery which is obtained by impregnating a layered, fat-based confectionery comprising a porous baked confectionery and a fat-based confectionery for layering with a fat-based confectionery substance for impregnation, and to a method for producing such a confectionery.

### Background Art

There have so far been marketed layered confectioneries produced by sandwiching jellies or fat-based creams between baked confectioneries such as wafers or cookies, confectioneries produced by coating these layered confectioneries with chocolate-like confectionery substances, and multi-layered fat-based confectioneries produced by layering creams and chocolate substances.

US4159348 discloses a pocket-size cake comprising a portion of bread component completely enrobed with chocolate and impregnated with a spirituous sugar-containing liqueur. The portion of bread component preferably consists of two layers bonded together by a layer of cream.

US4545997 discloses a process for producing a chocolate coated creamed wafer candy bar. The wafer sheets are first baked and a layer of cream is applied to then wafer sheets, and coated with a paste to produce a candy bar.

WO 97/47207 discloses a method for impregnating pores of a baked confectionery with a fat-based confectionery substance by immersing the porous baked confectionery in the melted fat-based confectionery substance for impregnation and reducing the pressure.

In layered confectioneries produced by sandwiching a cream between layers of a baked confectionery, or in confectioneries produced by coating this layered confectionery with a chocolate-like confectionery substance, the cream or chocolate-like confectionery substance is not impregnated into the inside of the baked confectionery. Thus, it is possible to perceive the texture and taste of the baked confectionery but it is not possible to enjoy the taste of the fat-based confectionery or to feel that the texture and taste of the baked confectionery is integrated into the fat-based confectionery. Another known method for sandwiching a layer of a fat-based confectionery substance and that of the fat-based confectionery substance mixed with a baked confectionery that has been crushed between layers of a baked confectionery. Even in the case of a layered confectionery produced by this method, it is possible to perceive the taste of the baked confectionery but it is not possible to fully enjoy the taste of the fat-based confectionery.

Furthermore, WO 97/47207 discloses complex fat-based confectioneries comprising porous baked confectioneries and fat-based confectioneries for impregnation. These fat-based confectioneries are neither sufficient for diversity in taste and texture unlike conventional layered confectioneries nor distinguishable from other fat-based confectioneries. Moreover, WO 97/47207 discloses neither impregnated, layered fat-based confectioneries nor even layered fat-based confectioneries.

### SUMMARY OF THE INVENTION

We found that a confectionery having particularly excellent taste and texture is obtained by immersing a layered, fat-based confectionery comprising a porous baked confectionery and a fat-based confectionery for layering in a melted fat-based confectionery substance for impregnation, and then impregnating the porous baked confectionery with the fat-based confectionery substance for impregnation under reduced pressure. The present invention is based on this finding.

An object of the present invention is to provide an impregnated, layered, fat-based confectionery comprising a porous baked confectionery, a fat-based confectionery for layering and a fat-based confectionery substance for impregnation, wherein the porous baked confectionery is impregnated with the fat-based confectionery substance for impregnation, and wherein the impregnated, layered, fat-based confectionery is obtainable by immersing a layered, fat-based confectionery comprising the porous baked confectionery and the fat-based confectionery for layering in the fat-based confectionery substance for impregnation that has been melted, and impregnating the porous baked confectionery with the fat-based confectionery substance for impregnation under reduced pressure.

A method for producing an impregnated, layered, fat-based confectionery according to the present invention comprises the steps of immersing a layered, fat-based confectionery comprising a porous baked confectionery and a fat-based confectionery for layering in a fat-based confectionery substance for impregnation that has been melted, and impregnating the porous baked confectionery with the fat-based confectionery substance for impregnation under reduced pressure.

The impregnated, layered, fat-based confectionery according to the present invention has particularly excellent texture characterized in that the taste and texture of the porous baked confectionery is integrated into the taste and texture of the layered fat-based confectionery.

### DETAILED DESCRIPTION OF THE INVENTION

The term "layered fat-based confectionery" as used herein refers to a confectionery comprising a porous baked confectionery and a fat-based confectionery for Layering, wherein these confectioneries are alternately layered and the outermost layers are the porous baked confectionery. These layers may be alternately layered either in the form of a sheet or in the form of a concentric circle. In the case where the confectionery is in the form of a sheet, the two outermost layers are a porous baked confectionery, an intermediate layer held (referred to as "sandwiched") between these layers is a fat-based confectionery for layering, and the layers of the porous baked confectionery and the layers of the fat-based confectionery for layering are alternately layered. A concentrically layered, fat-based confectionery may be obtained by injecting a fat-based confectionery substance for layering into a space between two layers of the porous baked confectionery made in the form of a concentric circle.

The number of layers that constitute the layered, fat-based confectionery may be odd, such as three, five, or even more than five. In the present invention, a fat-based confectionery consisting of three layers of a porous baked confectionery, a fat-based confectionery for layering and a porous baked confectionery, layered in that order (for example, a wafer, white chocolate, and a wafer in that order) is referred to as a "three-layered fat-based confectionery." A three-layered fat-based confectionery made by sandwiching two wafers is referred to as a "wafers-sandwich-type three-layered fat-based confectionery." A wafers-sandwich-type three-layered fat-based confectionery that has been cut into a predetermined shape is referred to as a "wafers-sandwich-type three-layered shaped fat-based confectionery." When a layered fat-based confectionery comprises five layers, it is referred to as a "five-layered fat-based confectionery."

The term "porous baked confectionery" as used herein means a baked confectionery containing therein pores and includes wafers, biscuits and cookies.

The term "fat-based confectionery for layering" as used herein refers to a fat-based confectionery that is suitable for being sandwiched between layers of a porous baked confectionery and includes chocolate, white chocolate, white creams, nut pastes, and nut-paste-containing white creams. The fat-based confectionery for layering may be either a tempering type (which needs to be tempered) or a non-tempering type (which does not need to be tempered).

The term "fat-based confectionery substance for impregnation" as used herein means a fat-based confectionery substance that is suitable for being impregnated into a baked confectionery and includes chocolate including milk chocolate, chocolate substances prepared by blending chocolate as main ingredient with cocoa butter and other ingredients, and white chocolate substances. The fat-based confectionery substance for impregnation may be either tempering type or non-tempering type.

From the viewpoints of taste and texture, the impregnated, layered, fat-based confectionery according to the present invention are preferably those wherein the porous baked confectionery is a wafer, biscuit, or cookie, the fat-based confectionery for layering chocolate, white chocolate, a white cream, or a nut paste, and the fat-based confectionery substance for impregnation is chocolate; or those wherein the porous baked confectionery is a wafer, biscuit, or cookie, the fat-based confectionery for layering is chocolate or a nut paste, and the fat-based confectionery substance for impregnation is white chocolate.

In the present invention, the porous baked confectionery can be impregnated with the fat-based confectionery substance for impregnation by immersing the layered, fat-based confectionery in the fat-based confectionery substance for impregnation that has been melted; placing the layered, fat-based confectionery in a vacuum-resistant, airtight chamber; deaerating the porous baked confectionery that constitutes the layered fat-based confectionery under reduced pressure; increasing the internal pressure of the chamber to the atmospheric pressure after confirming that the pressure reaches to a predetermined vacuum level. Thus, the pores in the porous baked confectionery can be impregnated with the fat-based confectionery substance for impregnation by treating the layered, fat-based confectionery with the fat-based confectionery substance for impregnation according to this impregnation process conducted under reduced pressure.

To impregnate the porous baked confectionery that constitutes the layered fat-based confectionery with the fat-based confectionery substance for impregnation, the internal pressure of the vacuum-resistant, airtight chamber may be reduced to any vacuum level by using a vacuum pump as long as the fat-based confectionery substance for impregnation can fully be impregnated into the pores in the porous baked confectionery. It is, however, preferable that the vacuum level be about 0.5 kPa or more and about 60 kPa or less, more preferably about 1 kPa or more and about 50 kPa or less. When the internal pressure of the chamber is in excess of 60 kPa, the melted fat-based confectionery substance for impregnation may be not fully impregnated into the porous baked confectionery. The more the internal pressure of the chamber is reduced, the more the fat-based confectionery substance for impregnation impregnates into the porous baked confectionery. However, when the internal pressure of the chamber is reduced to less than 0.5 kPa, an extremely small amount of water contained in the layered fat-based confectionery transpires, so that latent heat of transpiration is removed from the melted fat-based confectionery substance for impregnation. As a result, the viscosity of the melted fat-based confectionery substance for impregnation increases, and the layered fat-based confectionery may thus be coated with a thick layer of the fat-based confectionery substance.

In the case where wafers are used as a porous baked confectionery, it is preferable to conduct the impregnation process under a reduced pressure of approximately 6 kPa to approximately 50 kPa.

In the case where biscuits or cookies are used as a porous baked confectionery, it is preferable to conduct the impregnation process under a reduced pressure of approximately 1 kPa to approximately 25 kPa.

To effect the impregnation process, it is preferable to raise the temperature of the fat-based confectionery substance for impregnation to approximately 34°C or more and approximately 40°C or less when the fat-based confectionery substance for impregnation is a tempering type. A mixture of 100 parts by weight of a tempering type fat-based confectionery substance heated to a temperature in the above-described range and 1.5 parts by weight of BOB (1,3-dibehenoyl-2-oleoyl glycerol) crystalline powder may also be used as the fat-based confectionery substance for impregnation. If the temperature of the fat-based confectionery substance for impregnation is lower than 34°C, the crystallization of cocoa butter proceeds, so that the viscosity of the substance unfavorably increases. On the other hand, when the temperature of the fat-based confectionery paste for impregnation is raised to more than 40°C, a BOB's effect that cocoa butter melted at a temperature higher than 40°C self-returns to the crystalline form of BOB is lost, causing unfavorable bloom.

In the case where the fat-based confectionery substance for impregnation is a non-tempering type, it is preferable to heat the substance to a temperature between a temperature at which the fatty ingredients of the substance melt and 50°C. When the non-tempering type fat-based confectionery substance for impregnation is heated to a temperature of more than 50°C, its taste unfavorably becomes worse.

After the layered, fat-based confectionery has been subjected to the impregnation process to impregnate the porous baked confectionery with the fat-based confectionery substance for impregnation, the impregnated, layered fat-based confectionery according to the present invention can be produced by taking out of the fat-based confectionery substance for impregnation, removing the excess fat-based confectionery substance on the surface of the layered, fat-based confectionery by means of an air blower, a vibrator, or the like, solidifying the resulting confectionery by cooling.

According to a preferred embodiment of the present invention, there is provided an impregnated, layered fat-based confectionery produced by immersing a layered fat-based confectionery comprising a porous baked confectionery and a fat-based confectionery for layering in a fat-based confectionery substance for impregnation that has been melted, impregnating the porous baked confectionery with the fat-based confectionery substance for impregnation under a reduced pressure between 1 kPa and 50 kPa, and solidifying the resulting confectionery by cooling.

According to a preferred embodiment of the present invention, there is provided a method for producing an impregnated, layered fat-based confectionery, comprising the steps of immersing a layered fat-based confectionery comprising a porous baked confectionery and a fat-based confectionery for layering in a fat-based confectionery substance for impregnation that has been melted; impregnating the porous baked confectionery with the fat-based confectionery substance for impregnation under a reduced pressure between 1 kPa and 50 kPa; and solidifying the resulting confectionery by cooling.

### EXAMPLES

The present invention is further illustrated by the following Examples that are not intended as a limitation of the invention.

### Example 1

### (1) White Chocolate Substance for Layering as Confectionery Substance for Layering

44 parts by weight of powdered whole milk, 22 parts by weight of cocoa butter, 13 parts by weight of cacao-substitute fats ("Oleo A7" manufactured by Fuji Oil Co., Ltd., Japan), 37 parts by weight of sugar, 0.3 parts by weight of lecithin and 0.5 parts by weight of vanillin were mixed in a twin-screw mixer (Model 1600-3CVJM-075 manufactured by Satake Chemical Equipment Mfg., Ltd., Japan), and the mixture was pulverized in a roll refiner (Model SDY-200/150 manufactured by Buhler). To the mixture was further added 0.2 parts by weight of lecithin, and the resulting mixture was placed in a universal stirring-mixer (Model 5DM-03-R manufactured by San-Ei Seisaku-Sho Kabushiki Kaisha, Japan) and was stirred at 55°C for 48 hours to obtain a white chocolate substance. This white chocolate substance was tempered in a conventional manner to obtain a white chocolate substance for layering.

### (2) Wafer Sheet as Porous Baked Confectionery

100 parts by weight of medium flour, 0.75 parts by weight of salt, 2.5 parts by weight of egg yolk, 5 parts by weight of skim milk, 0.5 parts by weight of ammonium carbonate, 0.75 parts by weight of baking soda and 135 parts by weight of water were mixed in a mixer (Model KM-300 manufactured by AICOHSHA MFG., LTD., Japan) to obtain a wafer paste. This wafer paste was poured into a wafer baker (manufactured by FRANZ HAAS) and was baked at 200°C for 3 minutes to obtain a 3-mm thick wafer sheet.

### (3) Wafers-Sandwich-Type Three-Layered Shaped Fat-based Confectionery

The white chocolate substance prepared in (1) was evenly spread on one surface of the 3-mm thick wafer sheet obtained in (2), provided that the weight ratio of the white chocolate substance to the wafer sheet was made 3:1. On top of the white chocolate substance spread, another piece of the wafer sheet was laid and was stuck together, thereby obtaining a wafers-sandwich-type, layered fat-based confectionery composed of the three layers of the wafer sheet, the white chocolate and the wafer sheet, layered in the order mentioned. This layered, fat-based confectionery was placed in a refrigerator at 5°C and was solidified by cooling. The layered, fat-based confectionery thus solidified was cut into pieces with a size of 40 mm x 20 mm to obtain some pieces of a wafers-sandwich-type, three-layered, shaped fat-based confectionery. The weights of the one wafer and the white chocolate contained in each piece of this layered, shaped fat-based confectionery were 0.5 g and 1.5 g, respectively.

### (4) Chocolate Substance for Impregnation as Fat-based Confectionery Substance for Impregnation

38 parts by weight of sugar, 21 parts by weight of cacao mass, 16 parts by weight of powdered whole milk, 8 parts by weight of cocoa butter, 0.3 parts by weight of lecithin and 0.05 parts by weight of vanillin were mixed in a twin-screw mixer (Model 1600-3CVJM-075 manufactured by Satake Chemical Equipment Mfg., Ltd., Japan), and the mixture was pulverized in a roll refiner (Model SDY-200/150 manufactured by Buhler). To the mixture were further added 0.2 parts by weight of lecithin and 17 parts by weight of cocoa butter, and the resulting mixture was placed in a universal stirring-mixer (Model 5DM-03-R manufactured by San-Ei Seisaku-Sho Kabushiki Kaisha, Japan) and was stirred at 55°C for 48 hours to obtain a melted chocolate substance. This chocolate substance was placed in a universal stirring-mixer (Model 5DM-03-R manufactured by San-Ei Seisaku-Sho Kabushiki Kaisha, Japan), and its temperature was adjusted to 35°C. Thereafter, 1.5 parts by weight of BOB crystalline powder was added to 100 parts by weight of the melted chocolate substance to obtain a chocolate substance for impregnation serving as the fat-based confectionery substance for impregnation. The viscosity of this chocolate substance for impregnation was 100 P.

### (5) Chocolate-Impregnated Wafers-Sandwich-Type Three-Layered Shaped Fat-based Confectionery as Impregnated, Layered Fat-based Confectionery

The wafers-sandwich-type, three-layered, shaped fat-based confectionery obtained in (3) was placed in a wire-mesh-made container, which was then covered with a wire-mesh-made lid. This container was placed in a vessel containing the chocolate substance for impregnation prepared in (4), thereby immersing the wafers-sandwich-type, three-layered, shaped fat-based confectionery in the chocolate substance for impregnation. This vessel was placed in a vacuum-resistant, airtight chamber (Vacuum Drying Chamber Model NV-1 manufactured by Tabai-Espec Kabushiki Kaisha, Japan), and the internal pressure of the chamber was reduced to 50.0 kPa by the use of a vacuum pump (oil-free scroll vacuum pump manufactured by Anest Iwata Corporation, Japan). Thereafter, a valve fixed to a pipe connecting the vacuum pump and the vacuum-resistant, airtight chamber was closed; the operation of the vacuum pump was stopped; and a leak valve fixed to the vacuum-resistant, airtight chamber was opened to return the internal pressure of the chamber to the atmospheric pressure. Subsequently, the vacuum-resistant, airtight chamber was opened; the vessel containing the chocolate substance for impregnation was taken out of the chamber; the wire-mesh-made container was taken out of the vessel; and the wafers-sandwich-type, three-layered, shaped fat-based confectionery comprising the wafer, the white chocolate and the wafer, impregnated with the chocolate substance was finally withdrawn from the container. The excess chocolate paste on this layered, fat-based confectionery was removed by blowing air, and the resulting confectionery was placed in a refrigerator at 5°C (Model HR-9D3 manufactured by Hoshizaki Denki Kabushiki Kaisha, Japan) and was thus solidified by cooling to obtain a chocolate-impregnated, wafers-sandwich-type, three-layered, shaped fat-based confectionery. This layered, fat-based confectionery has a novel cross section that is completely different from the cross sections of conventional multi-layered fat-based confectioneries.

### Example 2

### (1) Biscuits for Sandwiching

90 parts by weight of medium flour, 2 parts by weight of corn starch, 7 parts by weight of fresh butter, 9 parts by weight of margarine (manufactured by The Nisshin Oil Mills Ltd., Japan), 21 parts by weight of granulated sugar, 0.6 parts by weight of salt, 2 parts by weight of powdered whole milk, 4 parts by weight of whole egg, 0.5 parts by weight of ammonium carbonate, 0.5 parts by weight of baking soda and 22 parts by weight of water were kneaded in a twin-screw mixer (Model 1600-3CVJM-075 manufactured by Satake Chemical Equipment Mfg., Ltd., Japan) to obtain a biscuit dough. This biscuit dough was rolled out with a rolling pin, and the 3-mm thick biscuit dough sheet thus obtained was cut into pieces with a size of 40 mm x 20 mm, followed by baking for 10 minutes in an oven (Model NC-CG-15S manufactured by SANKO MACHINERY CO., LTD., Japan), provided that the temperatures of the upper and lower parts of the oven were set to 160°C and 160°, respectively. Thus, biscuits for sandwiching, each weighing 1.0 g, were obtained.

### (2) Biscuits-Sandwich-Type, Three-Layered Fat-based confectionery

1.5 g of the white chocolate substance for layering prepared in (1) in Example 1 was spread on one surface of the biscuit obtained in (1). On top of the white chocolate substance spread, another piece of the biscuit obtained in (1) was laid and was stuck together to obtain a biscuits-sandwich-type, three-layered fat-based confectionery.

### (3) Chocolate-Impregnated Biscuits-Sandwich-Type Three-Layered Fat-based Confectionery as Impregnated Layered Fat-based Confectionery

In the same manner as in Example 1, the above-obtained biscuits-sandwich-type, three-layered fat-based confectionery was immersed in the chocolate substance for impregnation prepared in (4) in Example 1. The vessel containing the chocolate substance for impregnation was placed in the same vacuum-resistant, airtight chamber as in Example 1, and the internal pressure of the chamber was reduced to 2.0 kPa. Thereafter, the internal pressure of the chamber was increased to the atmospheric pressure, and the vessel was taken out of the chamber; the wire-mesh-made container immersed in the chocolate substance for impregnation was withdrawn; and the biscuits-sandwich-type, three-layered, fat-based confectionery composed of the three layers of the biscuit, the white chocolate and the biscuit, impregnated with the chocolate substance was finally withdrawn from the container. The excess chocolate substance on the surface of this impregnated, layered, fat-based confectionery was removed by blowing air, and the resulting confectionery was placed in a refrigerator at 5°C (Model HR-9D3 manufactured by Hoshizaki Denki Kabushiki Kaisha, Japan) and was thus solidified by cooling to obtain a chocolate-impregnated, biscuits-sandwich-type, three-layered, fat-based confectionery. This layered, fat-based confectionery has a novel cross section that is completely different from the cross sections of conventional multi-layered fat-based confectioneries.

### Example 3

### (1) Non-Tempering type White Cream Substance as Fat-based Confectionery Substance for Layering

44 parts by weight of powdered whole milk, 35 parts by weight of shortening (Shortening NB2 manufactured by Miyoshi Oil & Fat Co., Ltd., Japan), 19 parts by weight of sugar, 0.2 parts by weight of lecithin and 0.02 parts by weight of vanillin were homogeneously mixed in a twin-screw mixer (Model 1600-3CVJM-075 manufactured by Satake Chemical Equipment Mfg., Ltd., Japan), and the mixture was rolled in a roll refiner (Model SDY-200/150 manufactured by Buhler). The rolled mixture was placed in a universal stirring-mixer (Model 5DM-03-R manufactured by San-Ei Seisaku-Sho Kabushiki Kaisha, Japan), to which 0.3 parts by weight of lecithin was further added. The resulting mixture was stirred and was then subjected to conching at 40°C for 3 hours to obtain a non-tempering type white cream substance.

### (2) Wafers-Sandwich-Type Three-Layered Fat-based Confectionery

The above-obtained white cream substance was spread on one surface of the 3-mm thick wafer sheet obtained in (2) in Example 1, provided that the weight ratio of the white cream paste to the wafer sheet was made 3:1. On top of the white cream substance spread, another piece of the wafer sheet was laid to obtain a wafers-sandwich-type, three-layered, fat-based confectionery.

### (3) Peanut-Paste-Containing White Cream Substance as Fat-based Confectionery Substance for Layering

100 parts by weight of the non-tempering type white cream substance obtained in (1) in this Example was mixed with 10 parts by weight of peanut paste prepared by finely grinding roasted peanuts in a roll refiner (Model SDY-200/150 manufactured by Buhler). The mixture was homogenized and its temperature was adjusted to 35°C, thereby obtaining a peanut-paste-containing white cream substance.

### (4) Wafers-Sandwich-Type Five-Layered Shaped Fat-based Confectionery as Layered Fat-based Confectionery

The peanut-paste-containing white cream substance prepared in (3) was evenly spread on the surface of the wafer, the outermost layer of the wafers-sandwich-type, three-layered, fat-based confectionery obtained in (2), provided that the weight ratio of the peanut-paste-containing white cream substance to the wafer sheet was made 3:1. On top of this white cream paste spread, another piece of the wafer sheet was laid and was stuck together. This layered, fat-based confectionery was solidified by cooling in the same manner as in Example 1 to obtain a wafers-sandwich-type, five-layered, fat-based confectionery composed of the five layers of the wafer, the white cream, the wafer, the peanut-paste-containing white cream and the wafer, layered in the order mentioned. This layered, fat-based confectionery was cut into pieces with a size of 40 mm x 20 mm to obtain some pieces of a wafers-sandwich-type, five-layered, shaped fat-based confectionery.

### (5) Non-Tempering Type Chocolate Cream Substance for Impregnation as Fatty Confectionery Substance for Impregnation

35 parts by weight of sugar, 15 parts by weight of shortening (Shortening NB2 manufactured by Miyoshi Oil & Fat Co., Ltd., Japan), 8 parts by weight of cacao mass, 20 parts by weight of powdered whole milk, 3 parts by weight of cocoa powder (Cocoa Powder M-12 manufactured by Meiji Seika Kaisha Ltd., Japan) and 0.2 parts by weight of lecithin were uniformly mixed in a twin-screw mixer (Model 1600-3CVJM-075 manufactured by Satake Chemical Equipment Mfg., Ltd., Japan), and the mixture was rolled in a roll refiner (Model SDY-200/150 manufactured by Buhler). The rolled mixture was placed in a universal stirring-mixer (Model 5DM-03-R manufactured by San-Ei Seisaku-Sho Kabushiki Kaisha, Japan), to which 19 parts by weight of the shortening and 0.3 parts by weight of lecithin were further added. The resulting mixture was stirred and was then subjected to conching at 50°C for 12 hours. Thereafter, the mixture was cooled to 35°C to obtain, as the fat-based confectionery substance for impregnation, a non-tempering type chocolate cream substance for impregnation having a viscosity of 90 P.

### (6) Chocolate-Cream-Impregnated Wafers-Sandwich-Type Five-Layered Shaped Fat-based Confectionery as Impregnated Layered Fat-based Confectionery

In the same manner as in Example 1, the wafers-sandwich-type, five-layered, shaped fat-based confectionery obtained in (4) was immersed in the non-tempering type chocolate cream substance for impregnation prepared in (5). The vessel containing the chocolate cream substance for impregnation in which the five-layered, shaped fat-based confectionery was immersed was placed in the same vacuum-resistant, airtight chamber as in Example 1, and the internal pressure of the chamber was reduced to 24.0 kPa to impregnate the wafers contained in the five-layered, shaped fat-based confectionery with the chocolate cream substance for impregnation, thereby obtaining a chocolate-cream-impregnated, wafers-sandwich-type, five-layered, shaped fat-based confectionery.

### Comparative Example 1: Wafers-Sandwich-Type, Three-Layered, Shaped Fat-based confectionery Simply Coated with Chocolate

The wafers-sandwich-type, three-layered, shaped fat-based confectionery obtained in (3) in Example 1 was immersed in the chocolate substance for impregnation prepared in (4) in Example 1 and was then withdrawn without conducting vacuum impregnation. The resulting confectionery was solidified by cooling in the same manner as in Example 1, thereby obtaining a wafers-sandwich-type, three-layered, shaped fat-based confectionery simply coated with chocolate.

### Comparative Example 2: Biscuits-Sandwich-Type, Three-Layered, Fat-based confectionery Simply Coated with Chocolate

The biscuits-sandwich-type, three-layered, fat-based confectionery obtained in (2) in Example 2 was immersed in the chocolate substance for impregnation prepared in (4) in Example 1 and was then withdrawn without conducting vacuum impregnation. The resulting confectionery was solidified by cooling in the same manner as in Example 1, thereby obtaining a biscuits-sandwich-type, three-layered, fat-based confectionery simply coated with chocolate.

### Comparative Example 3: Wafers-Sandwich-Type, Five-Layered, Shaped Fat-based confectionery Simply Coated with Chocolate

The wafers-sandwich-type, five-layered, shaped fat-based confectionery obtained in (4) in Example 3 was immersed in the non-tempering type chocolate cream substance for impregnation prepared in (5) in Example 3 and was then withdrawn without conducting vacuum impregnation. The resulting confectionery was solidified by cooling in the same manner as in Example 1, thereby obtaining a wafers-sandwich-type, five-layered, shaped fat-based confectionery simply coated with chocolate.

### Test Example 1: Organoleptic Evaluation Test

The confectioneries of Examples 1, 2 and 3 and those of Comparative Examples 1, 2 and 3 were organoleptically evaluated by 20 professional panelists as to whether the texture of the baked confectionery is integrated into the texture of the fat-based confectionery. The results are as shown in Table 1.

The organoleptic evaluation was conducted in accordance with the following criteria:
5 points: Having particularly pleasant novel texture characterized in that the texture of the baked confectionery is integrated into the texture of the fat-based confectionery.
4 points: Having pleasant novel texture characterized in that the texture of the baked confectionery is integrated into the texture of the fat-based confectionery.
3 points: Having undistinguished texture as compared to conventional products.
2 points: Having texture slightly inferior to conventional products.
1 point: Having texture inferior to conventional products.

In the table, "Average Score of Organoleptic Evaluation" denotes the average of the scores reported by the 20 professional panelists.

**Table 1**

| Organoleptic Evaluation of Impregnated, Layered Fat-based Confectioneries of the Present Invention and Coated, Layered Fat-based Confectioneries of Comparative Examples | | | | |
|---|---|---|---|---|
| Sample | Cross Section | Texture | Average Score of organoleptic Evaluation | Standard Deviation |
| Ex. 1 | Novel 3-layered, cross section, the porous baked confectionery being impregnated with the fat-based confectionery substance for impregnation. | The texture of the wafers is integrated into the texture of the chocolate; pleasant, novel texture. | 4.5 | 0.17 |
| Ex. 2 | Novel 3-layered cross section, the porous baked confectionery being impregnated with the fat-based confectionery substance for impregnation. | The texture of the biscuits is integrated into the texture of the chocolate; pleasant, novel texture. | 4.7 | 0.15 |
| Ex. 3 | Novel 5-layered cross section, the porous baked confectionery being impregnated with the fat-based confectionery substance for impregnation. | The texture of the slightly soft chocolate cream, is integrated into the texture of the wafers; pleasant, novel texture. | 4.5 | 0.14 |
| Comp. Ex. 1 | The cross section is similar to those of conventional products. | The texture of the chocolate coating is independent of the texture of the wafer; the texture is not distinguishable from conventional products with chocolate sandwiched between wafers. | 3.2 | 0.14 |
| Comp. Ex. 2 | The cross section is similar to those of conventional products. | The texture of the chocolate coating is independent of the texture of the biscuits; the texture is not distinguishable from conventional chocolate sandwich biscuits. | 3.1 | 0.12 |
| Comp. Ex. 3 | The cross section is similar to those of conventional products. | The texture of the slightly soft chocolate cream is independent of the texture of the wafers; unpleasant texture. | 3.0 | 0.18 |

Significant test was carried out between two samples, that is, between the samples of Examples 1, 2 and 3 and those of Comparative Examples 1, 2 and 3, respectively. As a result, a significant difference was found in each run with a confidence limit of 95% as shown in Table 1. It was thus confirmed that impregnated, layered fat-based confectioneries according to the present invention, having a novel cross section and a texture characterized in that the texture of porous baked confectioneries is integrated into the texture of fat-based confectioneries were successfully obtained by the method of the invention, that is, by immersing, in melted fat-based confectionery substances for impregnation, layered fat-based confectioneries comprising porous baked confectioneries and fat-based confectioneries for layering, and impregnating the porous baked confectioneries with the fat-based confectionery substances for impregnation under reduced pressure, while simultaneously coating the layered fat-based confectioneries with the fat-based confectionery substance for impregnation.

## Claims

1. An impregnated, layered, fat-based confectionery comprising a porous baked confectionery, a fat-based confectionery for layering and a fat-based confectionery substance for impregnation, wherein the porous baked confectionery is impregnated with the fat-based confectionary substance for impregnation, and wherein the impregnated, layered, fat-based confectionary is obtainable by immersing a layered, fat-based confectionery comprising the porous baked confectionery and the fat-based confectionery for layering in the fat-based confectionery substance for impregnation that has been melted, and impregnating the porous baked confectionery with the fat-based confectionery substance for impregnation under reduced pressure.

2. The impregnated, layered, fat-based confectionery according to claim 1, wherein the porous baked confectionery is impregnated with the fat-based confectionery substance for impregnation under a reduced pressure of approximately 0.5 kPa or more and approximately 60 kPa or less.

3. The impregnated, layered, fat-based confectionery according to any of claims 1 to 2, wherein the porous baked confectionery is a wafer, biscuit or cookie.

4. The impregnated, layered, fat-based confectionery according to any of claims 1 to 3, wherein the fat-based confectionery for layering is chocolate, white chocolate, a white cream, a nut paste or a nut-paste-containing white cream.

5. The impregnated, layered, fat-based confectionery according to any of claims 1 to 4, wherein the fat-based confectionery substance for impregnation is chocolate or white chocolate.

6. The impregnated, layered, fat-based confectionery according to any of claims 1 to 5, wherein the fat-based confectionery substance for impregnation is a tempered fat-based confectionery substance containing BOB crystalline powder.

7. A method for producing an impregnated, layered, fat-based confectionery comprising the steps of:
immersing a layered, fat-based confectionery comprising a porous baked confectionery and a fat-based - confectionery for layering in a fat-based confectionery paste for impregnation that has been melted, and
impregnating the porous baked confectionery with the fat-based confectionery paste for impregnation under reduced pressure.

8. The method according to claim 7, wherein the step of impregnating the porous baked confectionery with the fat-based confectionery substance for impregnation is conducted under a reduced pressure of approximately 0.5 kPa or more and approximately 60 kPa or less.

9. The method according to claim 7 or 8, wherein the porous baked confectionery is a wafer, biscuit or cookie.

10. The method according to any of claims , 7 to 9, wherein the fat-based confectionery for layering is chocolate, white chocolate, a white cream, a nut paste or a nut-paste-containing white cream.

11. The method according to any of claims 7 to 10, wherein the fat-based confectionery substance for impregnation is chocolate or white chocolate.

12. The method according to any of claims 7 to 11, wherein the fat-based confectionery substance for impregnation is a tempered fat-based confectionery substance containing BOB crystalline powder.

## Patentansprüche

1. Imprägnierte, schichtartige, fettbasierte Süßware, die eine porenhaltige gebackene Süßware, eine fettbasierte Süßware zur Schichtung und eine fettbasierte Süßwarensubstanz zur Imprägnierung umfasst, wobei die porenhaltige gebackene Süßware mit der fettbasierten Süßwarensubstanz zur Imprägnierung imprägniert ist und wobei die imprägnierte, schichtartige, fettbasierte Süßware hergestellt werden kann durch:
Eintauchen einer schichtartigen, fettbasierten Süßware, die die porenhaltige gebackene Süßware und die fettbasierte Süßware zur Schichtung umfasst, in der geschmolzenen fettbasierten Süßwarensubstanz zur Imprägnierung, und
Imprägnieren der porenhaltigen gebackenen Süßware mit der fettbasierten Süßwarensubstanz zur Imprägnierung bei verringertem Druck.

2. Imprägnierte, schichtartige, fettbasierte Süßware nach Anspruch 1, wobei die porenhaltige gebackene Süßware mit der fettbasierten Süßwarensubstanz zur Imprägnierung bei einem verringerten Druck von annähernd 0,5 kPa oder mehr und annähernd 60 kPa oder weniger imprägniert wird.

3. Imprägnierte, schichtartige, fettbasierte Süßware nach einem der Ansprüche 1 bis 2, wobei die porenhaltige gebackene Süßware eine Waffel, ein Keks oder ein Plätzchen ist.

4. Imprägnierte, schichtartige, fettbasierte Süßware nach einem der Ansprüche 1 bis 3, wobei die fettbasierte Süßware zur Schichtung Schokolade, weiße Schokolade, eine weiße Creme bzw. Sahne, eine Nusspaste oder eine nusspastenhaltige weiße Creme bzw. Sahne ist.

5. Imprägnierte, schichtartige, fettbasierte Süßware nach einem der Ansprüche 1 bis 4, wobei die fettbasierte Süßwarensubstanz zur Imprägnierung Schokolade oder weiße Schokolade ist.

6. Imprägnierte, schichtartige, fettbasierte Süßware nach einem der Ansprüche 1 bis 5, wobei die fettbasierte Süßwarensubstanz zur Imprägnierung eine getemperte fettbasierte Süßwarensubstanz ist, die BOB-Kristallinpulver enthält.

7. Verfahren zum Herstellen einer imprägnierten, schichtartigen, fettbasierten Süßware, umfassend die nachfolgenden Schritte:
Eintauchen einer schichtartigen, fettbasierten Süßware, die eine porenhaltige gebackene Süßware und eine fettbasierte Süßware zur Schichtung umfasst, in einer geschmolzenen fettbasierten Süßwarenpaste zur Imprägnierung, und
Imprägnieren der porenhaltigen gebackenen Süßware mit der fettbasierten Süßwarenpaste zur Imprägnierung bei verringertem Druck.

8. Verfahren nach Anspruch 7, wobei der Schritt des Imprägnierens der porenhaltigen gebackenen Süßware mit der fettbasierten Süßwarensubstanz zur Imprägnierung bei einem verringerten Druck von annähernd 0,5 kPa oder mehr und annähernd 60 kPa oder weniger durchgeführt wird.

9. Verfahren nach Anspruch 7 oder 8, wobei die porenhaltige gebackene Süßware eine Waffel, ein Keks oder ein Plätzchen ist.

10. Verfahren nach einem der Ansprüche 7 bis 9, wobei die fettbasierte Süßware zur Schichtung Schokolade, weiße Schokolade, eine weiße Creme bzw. Sahne, eine Nusspaste oder eine nusspastenhaltige weiße Creme bzw. Sahne ist.

11. Verfahren nach einem der Ansprüche 7 bis 10, wobei die fettbasierte Süßwarensubstanz zur Imprägnierung Schokolade oder weiße Schokolade ist.

12. Verfahren nach einem der Ansprüche 7 bis 11, wobei die fettbasierte Süßwaresubstanz zur Imprägnierung eine getemperte fettbasierte Süßwarensubstanz ist, die BOB-Kristallinpulver enthält.

## Revendications

1. Confiserie en couches à base de matière grasse et imprégnée comprenant une confiserie cuite poreuse, une confiserie à base de matière grasse pour la superposition et une substance pour confiserie à base de matière grasse pour l'imprégnation, dans laquelle la confiserie cuite poreuse est imprégnée avec la substance pour confiserie à base de matière grasse pour l'imprégnation, et dans laquelle la confiserie en couches à base de matière grasse et imprégnée peut être obtenue par
immersion d'une confiserie en couches à base de matière grasse comprenant la confiserie cuite poreuse et la confiserie à base de matière grasse pour la superposition dans la substance pour confiserie à base de matière grasse pour l'imprégnation qui si été fondue, et
imprégnation de la confiserie cuite poreuse avec la substance pour confiserie à base de matière grasse pour l'imprégnation sous pression réduite.

2. Confiserie en couches à base de matière grasse et imprégnée selon la revendication 1, dans laquelle la confiserie cuite poreuse est imprégnée avec la substance pour confiserie à base de matière grasse pour l'imprégnation sous une pression réduite d'environ 0,5 kPa ou plus et d'environ 60 kPa ou moins.

3. Confiserie en couches à base de matière grasse et imprégnée selon l'une quelconque des revendications 1 à 2, dans laquelle la confiserie cuite poreuse est une gaufrette, un biscuit ou un gâteau.

4. Confiserie en couches à base de matière grasse et imprégnée selon l'une quelconque des revendications 1 à 3, dans laquelle la confiserie à base de matière grasse pour la superposition est du chocolat, du chocolat blanc, une crème blanche, une pâte à base de noix ou une crème blanche contenant une pâte à base de noix.

5. Confiserie en couches à base de matière grasse et imprégnée selon l'une quelconque des revendications 1 à 4, dans laquelle la substance pour confiserie à base de matière grasse pour l'imprégnation est du chocolat ou du chocolat blanc.

6. Confiserie en couches à base de matière grasse et imprégnée selon l'une quelconque des revendications 1 à 5, dans laquelle la substance pour confiserie à base de matière grasse pour l'imprégnation est une substance tempérée pour confiserie à base de matière grasse contenant de la poudre cristalline de BOB.

7. Procédé de préparation d'une confiserie en couches à base de matière grasse et imprégnée comprenant les étapes de :
immersion d'une confiserie en couches à base de matière grasse comprenant une confiserie cuite poreuse et une confiserie à base de matière grasse pour la superposition dans une pâte pour confiserie à base de matière grasse pour l'imprégnation qui a été fondue, et
imprégnation de la confiserie cuite poreuse avec la pâte pour confiserie à base de matière grasse pour l'imprégnation sous pression réduite.

8. Procédé selon la revendication 7, dans lequel l'étape d'imprégnation de la confiserie cuite poreuse avec la substance pour confiserie à base de matière grasse pour l'imprégnation est réalisée sous une pression réduite d'environ 0,5 kPa ou plus et d'environ 60 kPa ou moins.

9. Procédé selon la revendication 7 ou 8, dans lequel la confiserie cuite poreuse est une gaufrette, un biscuit ou un gâteau.

10. Procédé selon l'une quelconque des revendications 7 à 9, dans lequel la confiserie à base de matière grasse pour la superposition est du chocolat, du chocolat blanc, une crème blanche, une pâte à base de noix ou une crème blanche contenant une pâte à base de noix.

11. Procédé selon l'une quelconque des revendications 7 à 10, dans lequel la substance pour confiserie à base de matière grasse pour l'imprégnation est du chocolat ou du chocolat blanc.

12. Procédé selon l'une quelconque des revendications 7 à 1.1, dans lequel la substance pour confiserie à base de matière grasse pour l'imprégnation est une substance tempérée pour confiserie à base de matière grasse contenant de la poudre cristalline de BOB.
